# FASCICULE DE BREVET EUROPEEN

(11) **EP 4 055 258 B1**
(45) Date de publication et mention de la délivrance du brevet: **27.12.2023**
(21) Numéro de dépôt: 20811702.8
(22) Date de dépôt: 02.11.2020
(51) Int. Cl.: F02C 7/00, F16L 37/00, F01D 9/06, F01D 17/02, F02C 7/22, H01R 13/629, F01D 25/18, F01D 25/00, F16L 25/01

(54) **DISPOSITIF DE RACCORDEMENT DE PIÈCES D'UN MOTEUR D'AÉRONEF ET SON PROCÉDÉ D'UTILISATION**
VORRICHTUNG ZUM VERBINDEN VON TEILEN EINES FLUGZEUGTRIEBWERKS UND VERFAHREN ZUR VERWENDUNG DERSELBEN
DEVICE FOR CONNECTING PARTS OF AN AIRCRAFT ENGINE AND METHOD FOR USING SAME

(30) Priorité: 07.11.2019 FR 1912524
(43) Date de publication de la demande: 14.09.2022
(73) Titulaire: SAFRAN AIRCRAFT ENGINES, 75015 Paris (FR)
(72) Inventeur: CROCHEMORE, Yves Roland, 77550 MOISSY-CRAMAYEL (FR); GARNIER, Alméric Pierre Louis, 77550 MOISSY-CRAMAYEL (FR); LHOMMEAU, Tony Alain Roger Joël, 77550 MOISSY-CRAMAYEL (FR); LIOTTE, Franck Serge Jacques, 77550 MOISSY-CRAMAYEL (FR)
(74) Mandataire: Gevers & Orès
(86) Numéro de dépôt international: PCT/FR2020/051975
(87) Numéro de publication internationale: WO 2021/089933

(56) Documents cités:
- EP-A1- 2 003 384
- EP-A1- 2 739 842
- EP-A2- 1 512 901

## Description

### Domaine technique de l'invention

L'invention est relative au domaine de l'assemblage de pièces de moteurs d'aéronefs. Elle se rapporte en particulier à un dispositif de raccordement de pièces d'un moteur d'aéronef. L'invention concerne également un procédé d'utilisation dudit dispositif de raccordement.

### Arrière-plan technique

L'état de la technique comprend notamment les documents EP-A1-2 003 384, EP-A1-2 739 842 et EP-A2-1 512 901.

Des projections récentes prévoient un doublement de la population d'aéronefs dans les prochaines décennies. Ces projections s'appuient elles-mêmes sur des prévisions d'augmentation du trafic de passager aboutissant à un doublement du nombre de passagers d'ici à 2030 et impliquant nécessairement une forte croissance du nombre d'aéronefs en circulation.

Afin de répondre à cette croissance, la production et la maintenance des aéronefs doivent elles aussi monter en cadence de manière significative. Il en va de même des moteurs de ces aéronefs.

Une des solutions envisagées pour répondre à cette problématique de montée en cadence consiste à utiliser des systèmes de couplage de pièces dits « rapides ». L'objectif est de gagner en simplicité et en temps d'opération sur les chaînes d'assemblage. En particulier, une telle solution consiste à remplacer des pièces habituellement boulonnées, vissées ou soudées entre elles par des dispositifs de raccordement plus modulaires qui permettent une fixation rapide.

De manière avantageuse, les dispositifs de raccordement rapides permettent de s'affranchir de la surveillance du couple de serrage inhérente aux pièces vissées entre elles. En effet, dans un aéronef, les raccordements vissés impliquent de vérifier le bon respect des contraintes de sécurité sur la fixation en mesurant le couple de serrage, par exemple avec une clé dynamométrique.

Les méthodes de couplage rapide connues utilisent, par exemple, des connecteurs de type à baïonnette ou des connecteurs de type « *push-pull* » pour lesquels aucune surveillance du couple de serrage n'est requise. En outre, ces systèmes sont dits rapides dans la mesure où ils permettent d'assembler ou de désassembler des pièces plus rapidement et raccourcissent donc la durée des opérations de montage/démontage par rapport à des fixations classiques.

Ces systèmes de couplage sont utilisés, par exemple, dans le domaine des sports automobiles où ils permettent le raccordement de canalisations de fluides (par exemple, de l'air, du fuel ou de l'huile) et de câbles électriques.

En outre, ils permettent aussi de renforcer la sécurisation des opérations de montage/démontage. En effet, un acte malveillant consistant au dévissage d'un raccordement vissé est rarement perceptible à l'oeil. A contrario, sur un système de couplage rapide, une manipulation malveillante d'un connecteur est plus facilement perceptible à l'oeil. L'utilisation d'un tel système réduit donc les risques de survenue d'évènements opérationnels de type IFSD (de l'anglais « *In Flight Shut Down* ») à cause d'un raccordement défectueux.

Toutefois, même pour un système de couplage rapide, il peut être très chronophage, au cours des opérations de montage et/ou de maintenance, de vérifier que deux pièces sont bien raccordées selon un raccordement nominal, c'est-à-dire tel que prévu par le constructeur du dispositif de raccordement.

En outre, un raccordement non nominal est d'autant plus probable qu'il peut être issu aussi bien de la mauvaise conduite d'une opération de montage ou de maintenance que d'un acte de malveillance.

Il est déjà connu de faire de la surveillance du couple de serrage pour des raccords vissés. Une telle approche repose sur la mesure dynamique de ce couple et la comparaison du gradient de l'évolution de ce couple avec des valeurs prédéterminées pour identifier si un couplage est suffisant ou non. Toutefois, cette approche impose des mesures complexes et ne s'applique pas à des raccordements rapides.

La demande de brevet EP 2739842 A1 décrit un procédé de surveillance de moyens de verrouillage. Dans ce cas, la surveillance s'applique à des moyens de verrouillage de type actuateur électrique et ne concerne donc pas un raccordement entre des pièces pour une liaison de transfert physique.

### Résumé de l'invention

La présente invention propose un dispositif de raccordement permettant de surveiller en temps réel l'état du raccordement entre les connecteurs compris dans un dispositif de raccordement et donc entre les pièces qu'il raccorde. En d'autres termes, le dispositif de raccordement intègre des moyens qui lui permettent de s'auto-diagnostiquer. En outre, dans certains modes de réalisation, le dispositif de raccordement peut aussi analyser l'évolution temporelle de l'état du raccordement et permettre de mieux gérer voire d'anticiper un dysfonctionnement lié à un raccordement défectueux.

À cet effet, selon un premier aspect, l'invention concerne un dispositif de raccordement de pièces d'un moteur d'aéronef, ledit dispositif comprenant un premier et un second connecteurs adaptés pour raccorder une première et une seconde pièces de manière à établir une liaison de transfert physique entre lesdites première et seconde pièces, ledit dispositif de raccordement étant caractérisé en ce qu'il comprend en outre :
- des moyens d'émission, adaptés pour générer un signal physique déterminé ;
- des premiers moyens de transmission, adaptés pour transmettre le signal physique déterminé entre au moins des premier, deuxième et troisième composants déterminés des premier et second connecteurs;
- le premier composant, compris dans le premier connecteur, ayant une première impédance déterminée, relative audit signal physique ;
- les au moins un deuxième et un troisième composants, compris dans le second connecteur, ayant respectivement une deuxième et une troisième impédance déterminées, relative audit signal physique, ladite deuxième impédance étant différente de ladite troisième impédance ;
- au moins un premier élément de connexion, compris dans le premier connecteur, associé au premier composant, et adapté pour établir une connexion avec au moins un deuxième et un troisième éléments de connexion, compris dans le second connecteur, et respectivement associés au deuxième et troisième composants ;
- des moyens de détection, adaptés pour mesurer au moins une caractéristique représentative du signal physique déterminé circulant dans les premier, deuxième et troisième composants ;
- des seconds moyens de transmission, adaptés pour transmettre des données de mesures issues des moyens de détection vers des premiers moyens de traitement ;
- les premiers moyens de traitement, adaptés pour recevoir des données de mesure issues des moyens de détection et générer des informations représentatives d'un état de raccordement entre les première et seconde pièces du moteur d'aéronef sur la base desdites données de mesure ; et
- des moyens d'affichage, adaptés pour afficher les informations représentatives d'un état de raccordement entre les première et seconde pièces du moteur d'aéronef. Le dispositif selon l'invention peut comprendre une ou plusieurs des caractéristiques suivantes, prises isolément les unes des autres ou en combinaison les unes avec les autres :
   - une liaison de transfert physique est une liaison de transfert d'un fluide, ou une liaison de transfert d'un signal électrique, ou une liaison de transfert d'un signal lumineux.
   - le signal physique déterminé est un signal électrique ou un signal lumineux.
   - la caractéristique représentative d'un signal physique déterminé est comprise parmi, l'impédance, l'intensité dudit signal physique ou l'amplitude dudit signal physique.
   - les premier, deuxième et troisième éléments de connexion des connecteurs sont disposés sur des portions distinctes desdits connecteurs de sorte que l'établissement d'une connexion entre deux éléments de connexion dépend de la position respective desdits connecteurs.
   - une information représentative d'un état de raccordement entre les première et seconde pièces est comprise parmi les informations suivantes :
      - l'absence de raccordement, correspondant à l'absence de connexion établie entre les premier et deuxième ou troisième éléments de connexion des connecteurs ;
      - le défaut de raccordement, correspondant à une connexion établie entre le premier élément de connexion du premier connecteur et le deuxième élément de connexion du second connecteur; et,
      - le raccordement nominal, correspondant à une connexion établie entre le premier élément de connexion du premier connecteur et le troisième élément de connexion du second connecteur.
   - les moyens d'affichage sont compris dans un connecteur, ou compris dans le moteur d'aéronef ou compris dans un équipement débarqué du moteur d'aéronef.
   - le dispositif comprend en outre :
      - des second moyens de traitement, adaptés pour traiter des informations représentatives d'un état de raccordement entre les première et seconde pièces du moteur d'aéronef acquises successivement de manière à déterminer une évolution temporelle d'un état de raccordement entre les première et seconde pièces du moteur d'aéronef ; et,
      - une mémoire, adaptée pour stocker des informations représentatives d'un état de raccordement entre les pièces d'un moteur d'aéronef.

L'invention concerne également, selon un second aspect, un procédé d'utilisation d'un dispositif de raccordement selon le premier aspect, ledit procédé comprenant les étapes de :
- l'émission d'au moins un signal physique ;
- la transmission du signal physique entre les moyens d'émission, le premier composant du premier connecteur et, lorsqu'une connexion est établie, un composant du second connecteur connecté au premier composant par les premier et deuxième ou troisième éléments de connexion ;
- la mesure d'au moins une caractéristique représentative du signal physique transmis ;
- la génération, à partir des données de mesure, d'informations représentatives d'un état de raccordement entre les première et seconde pièces du moteur d'aéronef ; et,
- l'affichage des informations représentatives d'un état de raccordement entre les première et seconde pièces du moteur d'aéronef.

Le procédé selon l'invention peut comprendre en outre les étapes suivantes :
- le traitement des informations représentatives d'un état de raccordement entre les première et seconde pièces du moteur d'aéronef acquises successivement de manière à déterminer une évolution temporelle de l'état de raccordement entre les première et seconde pièces du moteur d'aéronef ; et,
- le stockage, dans une mémoire, des informations représentatives d'un état de raccordement entre les première et seconde pièces du moteur d'aéronef.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 est une représentation schématique d'un mode de réalisation d'un dispositif de raccordement selon l'invention ;
[Fig. 2] la figure 2 est une représentation schématique d'un autre mode de réalisation d'un dispositif de raccordement selon l'invention;
[Fig. 3] la figure 3 est une représentation schématique d'encore un autre mode de réalisation d'un dispositif de raccordement selon l'invention;
[Fig. 4] la figure 4 est un diagramme d'étape d'un mode de mise en oeuvre du procédé selon l'invention ; et,
[Fig. 5] la figure 5 est un diagramme d'étape d'un autre mode de mise en oeuvre du procédé selon l'invention.

Les éléments ayant les mêmes fonctions dans les différents modes de réalisation ont les mêmes références dans les figures.

### Description détaillée de l'invention

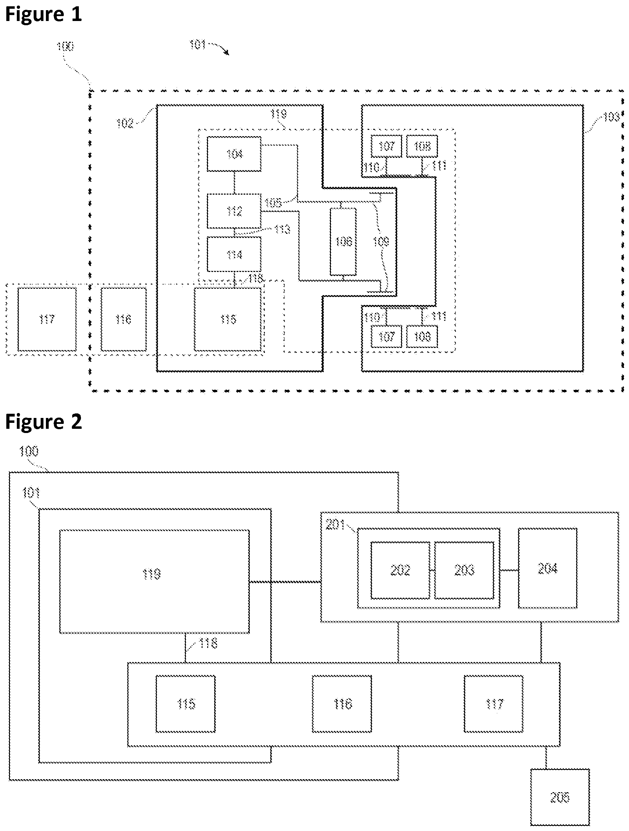

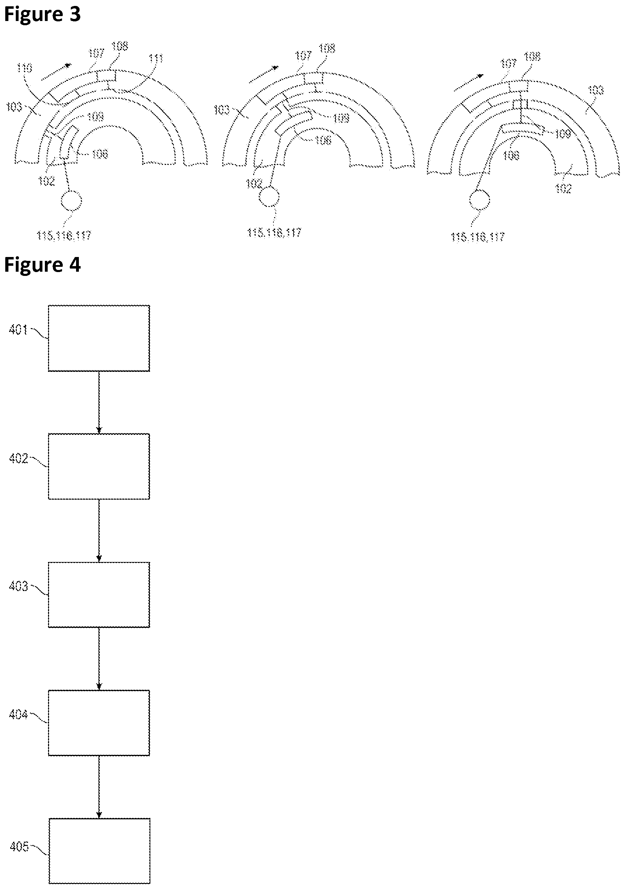

En référence à la figure 1, à la figure 2 et à la figure 3, nous allons maintenant décrire des modes de réalisation d'un dispositif de raccordement selon l'invention.

Le dispositif de raccordement 101 permet de raccorder deux pièces (non représentées dans les figures) d'un moteur d'aéronef 100. En particulier, le dispositif 101 comprend un premier connecteur 102 et un second connecteur 103 adaptés pour raccorder la première pièce et la seconde pièce de manière à établir une liaison de transfert physique entre ces deux pièces. Par exemple, les connecteurs sont respectivement solidaires d'une canalisation, d'un câble électrique ou d'une fibre optique. Ainsi, par liaison de transfert physique on désigne, par exemple, une liaison de transfert d'un fluide, une liaison de transfert d'un signal électrique ou encore une liaison de transfert d'un signal lumineux.

En outre, les deux connecteurs peuvent être l'un de type mâle et l'autre de type femelle ou tous deux de même type dans la mesure où ils permettent d'établir un raccordement permettant d'établir une liaison de transfert physique. De plus, de préférence, les connecteurs sont dépourvus de filetage. Autrement dit, le dispositif de raccordement est un dispositif de raccordement dit rapide pour lequel les connecteurs sont, par exemple, de connecteurs de type à baïonnette ou de type « *push-pull ».*

Le dispositif de raccordement selon l'invention permet notamment de réaliser un auto-diagnostique de l'état du raccordement qu'il fournit. Cette capacité repose sur un ensemble de moyens compris dans le dispositif de raccordement.

Les moyens d'émission 104 sont adaptés pour générer un signal physique déterminé. Un tel signal physique peut être, par exemple, un signal électrique ou un signal lumineux. Les moyens de transmission 105 sont adaptés pour transmettre le signal en question entre des composants des connecteurs 102 et 103.

Plus précisément, le premier composant 106, compris dans le premier connecteur 102, a une première impédance déterminée Z106, relative audit signal physique. L'expression « relative audit signal physique » désigne le fait que l'impédance peut être électrique ou optique suivant que le signal émis par les moyens d'émission 104 est un signal électrique ou optique.

Le deuxième composant 107 et le troisième composant 108, compris dans le second connecteur 103, ont respectivement une deuxième impédance Z107 et une troisième impédance Z108, relatives audit signal physique. La deuxième impédance Z107 est différente de la troisième impédance Z108.

Ainsi, dans l'exemple représenté, le signal physique émis par les moyens d'émission 104 circule, par l'intermédiaire des moyens de transmission 105, entre les différents composants (i.e. les composants 106, 107 et 108). En outre, l'homme du métier appréciera que le nombre de composants compris dans les connecteurs, et en particulier dans le second, peut être supérieur à deux.

Le premier élément de connexion 109, compris dans le premier connecteur 102, est associé au premier composant, et adapté pour établir une connexion avec le deuxième élément de connexion 110 et le troisième élément de connexion 111 qui sont eux-mêmes respectivement associés au deuxième et au troisième composant. En d'autres termes, le premier élément de connexion peut permettre d'établir une connexion avec le deuxième élément de connexion 110, avec le troisième élément de connexion 111 ou encore avec aucun de ces éléments de connexion. De cette manière, le signal physique émis ne circule que dans le premier composant, dans le premier et dans le second composants ou dans le premier et dans le troisième composants en fonction des éléments de connexion effectivement connectés.

En outre, les premier, deuxième et troisième éléments de connexion des connecteurs peuvent être disposés sur des portions distinctes des connecteurs de sorte que l'établissement d'une connexion entre deux éléments de connexion dépend de la position respective desdits connecteurs. En d'autres termes, le signal circule dans un circuit électrique différent (i.e. aux propriétés différentes) selon que les connecteurs sont plus ou moins bien raccordés. Ainsi, dans l'exemple représenté à la figure 1, l'établissement de connexion entre les éléments de connexion 109, 110 et 111 dépend de l'enfoncement du premier connecteur 102 dans le second connecteur 103. Un tel cas peut correspondre, par exemple, à l'utilisation de connecteurs de type « *push-pull ».* Dans un autre exemple, représenté à la figure 3, les connecteurs 102 et 103 ont des sections circulaires et les éléments de connexion respectifs des deux connecteurs 102 et 103 sont disposés sur des portions radiales distinctes de ces connecteurs. De cette manière, l'établissement d'une connexion ou non dépend de la position angulaire relative de chaque connecteur. Un tel cas peut correspondre, par exemple, à l'utilisation de connecteurs de type à baïonnette.

Les moyens de détection 112 sont adaptés pour mesurer au moins une caractéristique représentative du signal physique déterminé circulant dans les premier, deuxième et troisième composants. Par exemple, la caractéristique représentative du signal physique peut être l'impédance, l'intensité du signal physique ou encore l'amplitude du signal physique. En particulier, cette caractéristique change en fonction des connexions établies ou non entre les différents éléments de connexion et donc en fonction des composants dans lesquels le signal circule. De cette manière, cette caractéristique peut être utilisée pour déterminer l'état du raccordement entre les deux connecteurs et donc entre les deux pièces du moteur.

Les moyens de transmission 113 sont adaptés pour transmettre des données de mesures issues des moyens de détection vers les moyens de traitement 114 qui eux sont adaptés pour recevoir ces données et générer, sur la base de celles-ci, des informations représentatives d'un état de raccordement entre les première et seconde pièces du moteur d'aéronef. Dans un mode de réalisation particulier, les informations représentative d'un état de raccordement entre les première et seconde pièces peuvent être :
- l'absence de raccordement, qui correspond à l'absence de connexion établie entre les premier et deuxième ou troisième éléments de connexion des connecteurs (comme représenté sur la figure 3, à gauche) ;
- le défaut de raccordement, qui correspond à une connexion établie entre le premier élément de connexion du premier connecteur et le deuxième élément de connexion du second connecteur (comme représenté sur la figure 3, au milieu) ; et,
- le raccordement nominal, qui correspond à une connexion établie entre le premier élément de connexion du premier connecteur et le troisième élément de connexion du second connecteur (comme représenté sur la figure 3, à droite).

En résumé, l'établissement de certaines connexions modifie les propriétés du circuit formé par les différents composants connectés ce qui impacte la mesure réalisée par les moyens de détection et est reflété dans les informations représentatives générées par les moyens de traitement. Par exemple, l'ajout d'une nouvelle impédance, d'une valeur déterminée, au circuit dans lequel circule le signal, entraîne une modification de l'impédance détectée qui permet de statuer sur l'état précis du raccordement.

Enfin, les moyens d'affichage 115, 116 et 117 sont adaptés pour afficher les informations représentatives de l'état du raccordement entre les première et seconde pièces du moteur d'aéronef. Dans l'exemple représenté à la figure 1 et à la figure 2, les moyens d'affichage 115 sont compris dans le connecteur 102, les moyens d'affichage 116 sont compris dans le moteur d'aéronef 100 (i.e. sans être dans le connecteur) et les moyens d'affichage 117 sont compris dans un équipement débarqué du moteur d'aéronef. Ainsi, les moyens d'affichage 115 permettent à un opérateur de vérifier directement sur les connecteurs à raccorder, l'état du raccordement. Les moyens d'affichage 115 peuvent consister, par exemple, en une simple diode électroluminescente (LED, « *Light-Emitting Diode* » en anglais) située sur le connecteur affichant la couleur rouge, orange ou verte selon l'état du raccordement (i.e. respectivement absence de raccordement, défaut de raccordement ou raccordement nominal).

Les moyens d'affichage 116 permettent, quant à eux, à un opérateur de vérifier sur un affichage spécifique de la turbomachine l'état du raccordement. En outre, ces moyens n'étant intégrés à aucun connecteur, ils permettent un affichage plus complet, par exemple via l'utilisation d'un écran ou d'un boîtier de LED. En particulier, de tels moyens d'affichage peuvent afficher l'état de raccordement de plusieurs couples de pièces et ainsi restituer de manière synthétique l'état de l'ensemble des raccordements dans un moteur d'aéronef. Un tel affichage permet ensuite de guider et de prendre les mesures correctives sur les connexions défaillantes si besoin. Dans un tel mode de réalisation, un module de concaténation, intégré aux moyens d'affichage, centralise les informations issues de plusieurs unités de traitement de différents dispositifs de raccordement pour permettre à ceux-ci d'afficher l'ensemble de ces informations.

Enfin, les moyens d'affichage 117 permettent de vérifier l'état d'un raccordement via des moyens de consultation extérieur au moteur d'aéronef. Il peut s'agir, par exemple, d'un ordiphone (« *smartphone* » en anglais), d'une tablette, d'un ordinateur ou d'un dispositif de réalité augmentée (comme, par exemple, des lunettes).

Les modes de réalisation associés aux moyens d'affichage 116 et 117 permettent notamment d'utiliser une approche de type « test-déclenché » du dispositif de raccordement. C'est-à-dire une approche pour laquelle les opérations associées au diagnostic de l'état du raccordement ne sont activées que lorsqu'un opérateur le souhaite et non de manière continue.

En outre, dans tous les modes de réalisation décrits plus haut, les informations à afficher transitent entre l'ensemble des équipements 119 et les moyens d'affichage par des moyens de transmissions adaptés 118 qui peuvent être filaires ou non.

En résumé, grâce à ce dispositif, les opérations de montage sont sécurisées par la vérification simplifiée du bon verrouillage des connecteurs. Les inspections en maintenance de l'état de connexion ou la vérification de la bonne reconnexion des connecteurs après une opération de maintenance sont également facilitées. En outre, le processus de maintenance est facilité puisqu'il ne s'agit plus de contrôler l'ensemble des connecteurs par les moyens classiques et chronophage mais uniquement d'opérer sur les connecteurs le nécessitant, c'est-à-dire les connecteurs dont le raccordement est dans un état autre que nominal.

Le mode de réalisation du dispositif de raccordement décrit en référence à la figure 2 est destiné, quant à lui, à permettre, outre la surveillance de l'état du raccordement, l'établissement d'un pronostic permettant d'anticiper l'évolution future de l'état du raccordement.

En particulier, les moyens de traitement 201 sont adaptés pour traiter des informations représentatives d'un état de raccordement entre les première et seconde pièces du moteur d'aéronef qui sont acquises successivement. Ces informations acquises successivement sont utilisées pour déterminer l'évolution temporelle de l'état du raccordement entre les première et seconde pièces du moteur d'aéronef. Par exemple, dans un mode de réalisation particulier, les moyens de traitement 201, comprennent un module de traitement algorithmique 202 configuré pour déterminer une tendance dans l'évolution de l'état du raccordement (on parle de « *trend monitoring* » en anglais) et un module de rapport 203 configuré pour déterminer une prédiction de l'évolution future à partir de la tendance déterminée.

En outre, la mémoire 204 est adaptée pour stocker les informations représentatives d'un état de raccordement entre les pièces d'un moteur d'aéronef qui sont acquises successivement.

Typiquement, dans un tel mode de réalisation, un connecteur peut comprendre un nombre de composants avec des impédances différentes supérieur à deux. De cette manière, le dispositif de raccordement permet de suivre, plus précisément, l'évolution d'un état de raccord nominal vers un état de raccord non-nominale dans le temps et, par conséquent, de mieux prédire l'évolution de l'état du raccordement et une sortie éventuelle de l'état nominal vers un état non-nominal. En outre, ce type de prédiction permet non seulement d'envisager une action correctrice de re-branchement d'un connecteur pour restaurer le statut nominal de l'état du raccordement, mais il est également possible d'interpréter les informations acquises du point de vue de l'usure d'un connecteur pour optimiser les conditions de son remplacement.

Enfin, dans un mode de réalisation particulier, le dispositif de raccordement peut comprendre un dispositif d'alarme 205 intégré au cockpit de l'aéronef pour communiquer à un utilisateur, sur la base des informations représentatives de l'état du raccordement, une alerte.

En référence à la figure 4, nous allons maintenant décrire un mode de mise en oeuvre du procédé d'utilisation d'un dispositif de raccordement selon l'invention. Les étapes du procédé sont donc exécutées par un dispositif de raccordement tel que décrit en référence aux figures 1, 2 et 3.

L'étape 401 consiste en l'émission d'au moins un signal physique qui est ensuite transmis, lors de l'étape 402 entre les moyens d'émission, le premier composant du premier connecteur et, lorsqu'une connexion est établie, un composant du second connecteur connecté au premier composant par les premier et deuxième ou troisième éléments de connexion.

L'étape 403 consiste en la mesure d'au moins une caractéristique représentative du signal physique transmis et l'étape 404 consiste à partir de ces données de mesure, en la génération d'informations représentatives d'un état de raccordement entre les première et seconde pièces du moteur d'aéronef.

Enfin, l'étape 405 consiste en l'affichage des informations représentatives d'un état de raccordement entre les première et seconde pièces du moteur d'aéronef.

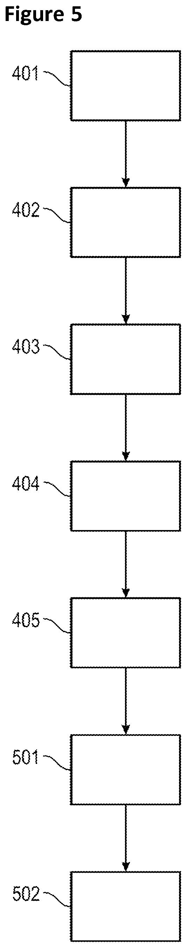

Dans un autre mode de mise en oeuvre du procédé, décrit en référence à la figure 5, le procédé comprend en outre l'étape 501 de traitement des informations représentatives d'un état de raccordement entre les première et seconde pièces du moteur d'aéronef acquises successivement de manière à déterminer l'évolution temporelle de l'état du raccordement entre les première et seconde pièces du moteur d'aéronef et l'étape 502 de stockage, dans une mémoire, des informations représentatives d'un état de raccordement entre les première et seconde pièces du moteur d'aéronef.

## Revendications

1. Dispositif de raccordement (101) de pièces d'un moteur d'aéronef (100), ledit dispositif comprenant un premier (102) et un second (103) connecteurs adaptés pour raccorder une première et une seconde pièces de manière à établir une liaison de transfert physique entre lesdites première et seconde pièces, ledit dispositif de raccordement étant **caractérisé en ce qu'**il comprend en outre :
- des moyens d'émission (104), adaptés pour générer un signal physique déterminé ;
- des premiers moyens de transmission (105), adaptés pour transmettre le signal physique déterminé entre au moins des premier, deuxième et troisième composants déterminés des premier et second connecteurs ;
- le premier composant (106), compris dans le premier connecteur, ayant une première impédance déterminée, relative audit signal physique ;
- les au moins un deuxième (107) et un troisième (108) composants, compris dans le second connecteur, ayant respectivement une deuxième et une troisième impédance déterminées, relative audit signal physique, ladite deuxième impédance étant différente de ladite troisième impédance ;
- au moins un premier élément de connexion (109), compris dans le premier connecteur, associé au premier composant, et adapté pour établir une connexion avec au moins un deuxième (110) et un troisième (111) éléments de connexion, compris dans le second connecteur, et respectivement associés au deuxième et troisième composants ;
- des moyens de détection (112), adaptés pour mesurer au moins une caractéristique représentative du signal physique déterminé circulant dans les premier, deuxième et troisième composants ;
- des seconds moyens de transmission (113), adaptés pour transmettre des données de mesures issues des moyens de détection vers des premiers moyens de traitement ;
- les premiers moyens de traitement (114), adaptés pour recevoir des données de mesure issues des moyens de détection et générer des informations représentatives d'un état de raccordement entre les première et seconde pièces du moteur d'aéronef sur la base desdites données de mesure ; et
- des moyens d'affichage (115, 116, 117), adaptés pour afficher les informations représentatives d'un état de raccordement entre les première et seconde pièces du moteur d'aéronef.

2. Dispositif de raccordement selon la revendication 1, dans lequel une liaison de transfert physique est une liaison de transfert d'un fluide, ou une liaison de transfert d'un signal électrique, ou une liaison de transfert d'un signal lumineux.

3. Dispositif de raccordement selon la revendication 1 ou la revendication 2, dans lequel, le signal physique déterminé est un signal électrique ou un signal lumineux.

4. Dispositif de raccordement selon l'une quelconque des revendications 1 à 3, dans lequel la caractéristique représentative d'un signal physique déterminé est comprise parmi, l'impédance, l'intensité dudit signal physique ou l'amplitude dudit signal physique.

5. Dispositif de raccordement selon l'une quelconque des revendications 1 à 4, dans lequel les premier, deuxième et troisième éléments de connexion des connecteurs sont disposés sur des portions distinctes desdits connecteurs de sorte que l'établissement d'une connexion entre deux éléments de connexion dépend de la position respective desdits connecteurs.

6. Dispositif de raccordement selon la revendication 5, dans lequel une information représentative d'un état de raccordement entre les première et seconde pièces est comprise parmi les informations suivantes :
- l'absence de raccordement, correspondant à l'absence de connexion établie entre les premier et deuxième ou troisième éléments de connexion des connecteurs ;
- le défaut de raccordement, correspondant à une connexion établie entre le premier élément de connexion du premier connecteur et le deuxième élément de connexion du second connecteur; et,
- le raccordement nominal, correspondant à une connexion établie entre le premier élément de connexion du premier connecteur et le troisième élément de connexion du second connecteur.

7. Dispositif de raccordement selon l'une quelconque des revendications 1 à 6, dans lequel les moyens d'affichage sont compris dans un connecteur, ou compris dans le moteur d'aéronef ou compris dans un équipement débarqué du moteur d'aéronef.

8. Dispositif de raccordement selon l'une quelconque des revendications 1 à 7 comprenant en outre :
- des seconds moyens de traitement (201), adaptés pour traiter des informations représentatives d'un état de raccordement entre les première et seconde pièces du moteur d'aéronef acquises successivement de manière à déterminer une évolution temporelle d'un état de raccordement entre les première et seconde pièces du moteur d'aéronef ; et,
- une mémoire (204), adaptée pour stocker des informations représentatives d'un état de raccordement entre les pièces d'un moteur d'aéronef.

9. Procédé d'utilisation d'un dispositif de raccordement selon l'une quelconque des revendications 1 à 8, ledit procédé comprenant les étapes de :
- l'émission (401) d'au moins un signal physique ;
- la transmission (402) du signal physique entre les moyens d'émission, le premier composant du premier connecteur et, lorsqu'une connexion est établie, un composant du second connecteur connecté au premier composant par les premier et deuxième ou troisième éléments de connexion ;
- la mesure (403) d'au moins une caractéristique représentative du signal physique transmis ;
- la génération (404), à partir des données de mesure, d'informations représentatives d'un état de raccordement entre les première et seconde pièces du moteur d'aéronef ; et,
- l'affichage (405) des informations représentatives d'un état de raccordement entre les première et seconde pièces du moteur d'aéronef.

10. Procédé d'utilisation selon la revendication 9 comprenant en outre les étapes suivantes :
- le traitement (501) des informations représentatives d'un état de raccordement entre les première et seconde pièces du moteur d'aéronef acquises successivement de manière à déterminer une évolution temporelle de l'état de raccordement entre les première et seconde pièces du moteur d'aéronef; et,
- le stockage (502), dans une mémoire, des informations représentatives d'un état de raccordement entre les première et seconde pièces du moteur d'aéronef.

## Patentansprüche

1. Anschlussvorrichtung (101) für Teile eines Motors eines Luftfahrzeugs (100), wobei die Vorrichtung einen ersten (102) und einen zweiten (103) Verbinder umfasst, die angepasst sind, um ein erstes und ein zweites Teil so zu verbinden, dass eine physikalische Übertragungsverbindung zwischen dem ersten und dem zweiten Teil hergestellt wird, wobei die Anschlussvorrichtung **dadurch gekennzeichnet ist, dass** sie weiter Folgendes umfasst:
- Sendemittel (104), die angepasst sind, um ein bestimmtes physikalisches Signal zu erzeugen;
- erste Übertragungsmittel (105), die angepasst sind, um das bestimmte physikalische Signal zwischen mindestens einer ersten, zweiten und dritten bestimmten Komponente des ersten und zweiten Verbinders zu übertragen ;
- wobei die erste Komponente (106), die in dem ersten Verbinder enthalten ist, eine erste bestimmte Impedanz aufweist, die sich auf das physikalische Signal bezieht;
- wobei die mindestens eine zweite (107) und eine dritte (108) Komponente, die in dem zweiten Verbinder enthalten sind, jeweils eine bestimmte zweite und eine bestimmte dritte Impedanz aufweisen, die sich auf das physikalische Signal beziehen, wobei sich die zweite Impedanz von der dritten Impedanz unterscheidet;
- mindestens ein erstes Verbindungselement (109), das in dem ersten Verbinder enthalten ist, der ersten Komponente zugeordnet ist und angepasst ist, um eine Verbindung mit mindestens einem zweiten (110) und einem dritten (111) Verbindungselement herzustellen, die in dem zweiten Verbinder enthalten sind und der zweiten bzw. dritten Komponente zugeordnet sind ;
- Erfassungsmittel (112), die angepasst sind, um mindestens ein Merkmal zu messen, die das bestimmte physikalische Signal darstellen, das in den ersten, zweiten und dritten Komponenten zirkuliert;
- zweite Übertragungsmittel (113), die geeignet sind, Messdaten aus den Erfassungsmitteln an erste Verarbeitungsmittel zu übertragen;
- wobei die ersten Verarbeitungsmittel (114) angepasst sind, um Messdaten aus den Erfassungsmitteln zu empfangen und Informationen zu erzeugen, die einen Anschlusszustand zwischen dem ersten und dem zweiten Teil des Luftfahrzeugmotors auf der Grundlage der Messdaten darstellen; und
- Anzeigemittel (115, 116, 117), die angepasst sind, um Informationen anzuzeigen, die einen Anschlusszustand zwischen dem ersten und dem zweiten Teil des Luftfahrzeugmotors darstellen.

2. Anschlussvorrichtung nach Anspruch 1, wobei eine physikalische Übertragungsverbindung eine Übertragungsverbindung eines Fluids, oder eine Übertragungsverbindung eines elektrischen Signals, oder eine Übertragungsverbindung eines Lichtsignals ist.

3. Anschlussvorrichtung nach Anspruch 1 oder Anspruch 2, wobei das bestimmte physikalische Signal ein elektrisches Signal oder ein Lichtsignal ist.

4. Anschlussvorrichtung nach einem der Ansprüche 1 bis 3, wobei das Merkmal, das ein bestimmtes physikalisches Signal darstellt, aus der Impedanz, der Stärke des physikalischen Signals oder der Amplitude des physikalischen Signals besteht.

5. Anschlussvorrichtung nach einem der Ansprüche 1 bis 4, wobei das erste, zweite und dritte Verbindungselement der Verbinder auf getrennten Abschnitten der Verbinder angeordnet sind, so dass die Herstellung einer Verbindung zwischen zwei Verbindungselementen von der jeweiligen Position der Verbinder abhängt.

6. Anschlussvorrichtung nach Anspruch 5, wobei eine Information, die einen Anschlusszustand zwischen dem ersten und dem zweiten Teil darstellt, aus den folgenden Informationen besteht:
- dem Fehlen von Anschluss, das dem Fehlen einer zwischen dem ersten und dem zweiten oder dritten Verbindungselement der Verbinder hergestellten Verbindung entspricht;
- dem Anschlussfehler, der einer hergestellten Verbindung zwischen dem ersten Verbindungselement des ersten Verbinders und dem zweiten Verbindungselement des zweiten Verbinders entspricht; und
- dem Nennanschluss, der einer zwischen dem ersten Verbindungselement des ersten Verbinders und dem dritten Verbindungselement des zweiten Verbinders hergestellten Verbindung entspricht.

7. Anschlussvorrichtung nach einem der Ansprüche 1 bis 6, wobei die Anzeigemittel in einem Verbinder enthalten sind oder im Luftfahrzeugmotor enthalten sind oder in einer Ausrüstung enthalten sind, die vom Luftfahrzeugmotor abgeladen wird.

8. Anschlussvorrichtung nach einem der Ansprüche 1 bis 7, weiter Folgendes umfassend:
- zweite Verarbeitungsmittel (201), die angepasst sind, um Informationen zu verarbeiten, die einen Anschlusszustand zwischen dem ersten und dem zweiten Teil des Luftfahrzeugmotors darstellen, die nacheinander erfasst werden, um eine zeitliche Entwicklung eines Anschlusszustands zwischen dem ersten und dem zweiten Teil des Luftfahrzeugmotors zu bestimmen; und
- einen Speicher (204), der angepasst ist, um Informationen zu speichern, die einen Anschlusszustand zwischen den Teilen eines Luftfahrzeugmotors darstellen.

9. Verfahren zur Verwendung einer Anschlussvorrichtung nach einem der Ansprüche 1 bis 8, wobei das Verfahren die folgenden Schritte umfasst:
- das Senden (401) mindestens eines physikalischen Signals ;
- das Übertragen (402) des physikalischen Signals zwischen den Sendemitteln, der ersten Komponente des ersten Verbinders und, wenn eine Verbindung hergestellt ist, einer Komponente des zweiten Verbinders, die durch das erste und das zweite oder dritte Verbindungselement mit der ersten Komponente verbunden ist;
- das Messen (403) mindestens eines Merkmals, welches das übertragene physikalische Signal darstellt;
- das Erzeugen (404) von Informationen aus den Messdaten, die einen Anschlusszustand zwischen dem ersten und dem zweiten Teil des Luftfahrzeugmotors darstellen; und
- das Anzeigen (405) von Informationen, die einen Anschlusszustand zwischen dem ersten und dem zweiten Teil des Luftfahrzeugmotors darstellen.

10. Verfahren zur Verwendung nach Anspruch 9, weiter umfassend die folgenden Schritte:
- Verarbeiten (501) von Informationen, die einen Anschlusszustand zwischen dem ersten und dem zweiten Teil des Luftfahrzeugmotors darstellen, die nacheinander erfasst werden, um eine zeitliche Entwicklung des Anschlusszustands zwischen dem ersten und dem zweiten Teil des Luftfahrzeugmotors zu bestimmen; und
- das Speichern (502) von Informationen, die einen Anschlusszustand zwischen dem ersten und dem zweiten Teil des Luftfahrzeugmotors darstellen, in einem Speicher.

## Claims

1. A device for connecting (101) parts of an aircraft engine (100), said device comprising a first (102) and a second (103) connectors suitable for connecting a first and a second parts so as to establish a physical transfer link between said first and second parts, said connection device being **characterized in that** it further comprises:
- emitting means (104), adapted to generate a determined physical signal;
- first transmission means (105), adapted to transmit the determined physical signal between at least first, second and third determined components of the first and second connectors;
- the first component (106), included in the first connector, having a first determined impedance, relative to said physical signal;
- said at least a second (107) and a third (108) components, included in the second connector, having respectively a second and a third determined impedance, relative to said physical signal, said second impedance being different from said third impedance;
- at least one first connecting element (109), included in the first connector, associated with the first component, and adapted to establish a connection link with at least one second (110) and one third (111) connecting element, included in the second connector, and respectively associated with the second and third component;
- detection means (112), adapted to measure at least one characteristic representative of the determined physical signal circulating in the first, second and third components;
- second transmission means (113), adapted to transmit measurement data from the detection means to first processing means;
- first processing means (114), adapted to receive measurement data from the detection means and generate information representative of a connection state between the first and second parts of the aircraft engine based on said measurement data; and
- display means (115, 116, 117), adapted to display the information representative of a connection state between the first and second parts of the aircraft engine.

2. The connection device of claim 1, wherein a physical transfer link is a transfer link of a fluid, or a transfer link of an electrical signal, or a transfer link of a light signal.

3. The connection device according to claim 1 or claim 2, wherein, the determined physical signal is an electrical signal or a light signal.

4. The connection device according to any one of claims 1 to 3, wherein the characteristic representative of a determined physical signal is included among, the impedance, the intensity of said physical signal or the amplitude of said physical signal.

5. The connection device according to any one of claims 1 to 4, wherein the first, second and third connecting elements of the connectors are arranged on separate portions of said connectors such that the establishment of a connection link between two connecting elements depends on the respective position of said connectors.

6. The connection device according to claim 5, wherein an information representative of a connection state between the first and second parts is included of the following information:
- the absence of connection, corresponding to the absence of connection link established between the first and second or third connecting elements of the connectors;
- the lack of connection, corresponding to a connection link established between the first connecting element of the first connector and the second connecting element of the second connector; and
- the nominal connection, corresponding to a connection link established between the first connecting element of the first connector and the third connecting element of the second connector.

7. The connection device according to any one of claims 1 to 6, wherein the display means are comprised in a connector, or included in the aircraft engine or comprised in an equipment offloaded from the aircraft engine.

8. The connection device according to any one of claims 1 to 7 further comprising:
- second processing means (201), adapted to process information representative of a connection state between the first and second parts of the aircraft engine acquired successively so as to determine a time evolution of a connection state between the first and second parts of the aircraft engine; and,
- a memory (204), adapted to store information representative of a connection state between the parts of an aircraft engine.

9. A method of use of a connection device according to any one of claims 1 to 8, said method comprising the steps of:
- emitting (401) at least one physical signal;
- transmitting (402) the physical signal between the emitting means, the first component of the first connector and, when a connection link is established, a component of the second connector connected to the first component by the first and second or third connecting elements;
- measuring (403) at least one characteristic representative of the transmitted physical signal;
- generating (404), from the measurement data, information representative of a connection state between the first and second parts of the aircraft engine; and,
- displaying (405) the information representative of a connection state between the first and second parts of the aircraft engine.

10. The method of use according to claim 9 further comprising the following steps:
- processing (501) the information representative of a connection state between the first and second parts of the aircraft engine acquired successively so as to determine a time evolution of the connection state between the first and second parts of the aircraft engine; and,
- storing (502), in a memory, information representatives of a connection state between the first and second parts of the aircraft engine.
